(19) Europäisches Patentamt
European Patent Office
Office européen des brevets

(11) **EP 3 259 188 B1**

(12) **FASCICULE DE BREVET EUROPEEN**

(45) Date de publication et mention de la délivrance du brevet:
**17.04.2019 Bulletin 2019/16**

(21) Numéro de dépôt: **16763906.1**

(22) Date de dépôt: **10.08.2016**

(51) Int Cl.:
*B64G 1/10* (2006.01)          *B64G 1/50* (2006.01)
*B64G 1/44* (2006.01)

(86) Numéro de dépôt international:
**PCT/FR2016/052062**

(87) Numéro de publication internationale:
**WO 2017/025691 (16.02.2017 Gazette 2017/07)**

(54) **SATELLITE ARTIFICIEL**

KÜNSTLICHER SATELLIT

ARTIFICIAL SATELLITE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.08.2015 FR 1501701**

(43) Date de publication de la demande:
**27.12.2017 Bulletin 2017/52**

(73) Titulaire: **Airbus Defence and Space SAS
31402 Toulouse Cedex 4 (FR)**

(72) Inventeurs:
• **CAEL, Philippe
ZI du Palays 31402 Toulouse Cedex 4 (FR)**

• **WALKER, Andrew
ZI du Palays 31402 Toulouse Cedex 4 (FR)**
• **MENA, Fabrice
ZI du Palays 31402 Toulouse Cedex 4 (FR)**

(74) Mandataire: **Cabinet Plasseraud
66, rue de la Chaussée d'Antin
75440 Paris Cedex 09 (FR)**

(56) Documents cités:
**EP-A2- 2 772 442      US-A- 5 833 175
US-A1- 2014 299 714      US-B1- 6 478 258**

**Description**

La présente invention se situe dans le domaine des satellites artificiels. En particulier, elle concerne la structure des satellites de télécommunication géostationnaires.

Il est souhaitable que les satellites présentent des dimensions faibles, d'une part, pour pouvoir être agencés dans des moyens de transport aérien existants, les transports par bateau étant beaucoup plus lent, et ,d'autre part, afin que ceux-ci puissent être lancés par des lanceurs ayant une coiffe de petit diamètre. En effet, lors du lancement, les satellites géostationnaires sont disposés sous la coiffe des lanceurs. En particulier, la fusée Proton qui permet de lancer des charges lourdes, dispose d'un espace circulaire sous coiffe de petit diamètre puisque celui-ci est égal à 3,90 mètres.

Par ailleurs, les constructeurs de satellites ambitionnent d'installer des radiateurs de grandes dimensions sur les faces Nord et Sud des satellites pour pouvoir refroidir un nombre toujours croissant d'équipements électroniques, et, en même temps, d'installer des réflecteurs de grand diamètre sur les faces Est et Ouest pour améliorer la qualité des émissions - réceptions.

Pour satisfaire ces exigences contradictoires, le document US 5,833,175 propose un satellite géostationnaire 2 représenté sur la figure 1. Ce satellite présente des faces Est 16 et Ouest 18 de plus grande longueur que les faces Nord 12 et Sud 14 de sorte que des réflecteurs 20 de grand diamètre peuvent être montés sur celles-ci. Pour augmenter la capacité de réjection thermique des radiateurs, ce document propose d'installer des radiateurs déployables sur les faces Nord et Sud. Toutefois, l'utilisation de radiateurs déployables implique l'utilisation de mécanisme de déploiement, de boucles fluides avec des connexions fluidiques souples. C'est une solution plus complexe, plus onéreuse, et plus risquée que l'utilisation de radiateurs fixes. De plus, les radiateurs déployables de ce satellite sont en saillie sur une grande longueur, ce qui gêne l'émission des signaux vers les réflecteurs latéraux, de sorte qu'avec des radiateurs déployables, il est plus difficile de monter plus d'un seul réflecteur sur chacune des faces Est et Ouest. Enfin, le satellite du document US 5,833,175 présente une faible capacité d'emport et ne permet pas d'accommoder un grand réservoir.

Le document US 6,478,258 divulgue un satellite ayant une face Nord supportant un radiateur principal dont au moins une partie est en saillie par rapport à au moins une face parmi la face Est et la face Ouest. Le document Us 2014/0299714 divulgue un satellite comportant un panneau de régulation thermique 212 fixé parallèlement et à distance d'un radiateur principal.

La présente invention a pour but de proposer un satellite ayant la capacité de supporter des charges importantes, ayant une grande capacité de réjection thermique, pouvant accommoder un réservoir de taille importante et plus de deux réflecteurs tout en présentant une bonne qualité de transmission.

A cet effet, l'invention propose un satellite artificiel comportant une face Nord, une face Sud opposée à la face Nord, une face Est et une face Ouest opposée à la face Est ; ledit satellite comprenant une direction longitudinale qui s'étend dans la direction de lancement, une première direction perpendiculaire à la direction longitudinale et une seconde direction perpendiculaire à la direction longitudinale et à la première direction, lesdites faces Nord et Sud étant perpendiculaires à ladite première direction, lesdites faces Est et Ouest étant perpendiculaires à ladite seconde direction, la distance entre les faces Est et Ouest mesurée selon la seconde direction étant inférieure à la distance entre les faces Nord et Sud mesurée selon la première direction, une face parmi la face Nord et la face Sud, supportant au moins un radiateur principal ayant une face externe dirigée vers l'espace et une face interne opposée à la face externe, au moins une partie dudit au moins un radiateur principal étant en saillie par rapport à au moins une face parmi la face Est et la face Ouest, le satellite comportant une structure porteuse portant la face Nord, la face Sud, la face Est et la face Ouest, caractérisé en ce que la face interne de ladite au moins une partie en saillie est recouverte d'un matériau ayant une émissivité infrarouge supérieure à 0.7, et en ce que la valeur de la dimension de ladite au moins une partie en saillie mesurée selon la direction est comprise entre 19% et 50% de la valeur de la distance entre les faces Est et Ouest mesurée selon la seconde direction.

Avantageusement, ce satellite comporte une grande surface radiative, et permet l'installation de plusieurs réflecteurs.

Ainsi, avantageusement, les faces internes des parties en saillie permettent d'évacuer une quantité supplémentaire de chaleur vers l'espace.

Ainsi, les parties en saillie peuvent avoir une dimension raisonnable et ne pas gêner l'émission et la réception des signaux par les réflecteurs du satellite. Par ailleurs des extensions trop importantes pourraient présenter des problèmes de rigidité. De plus, le facteur de vue vers l'espace des parties internes des extensions décroit avec la taille de celles-ci.

Avantageusement, cette configuration de satellite est simple, fiable et moins coûteuse. Elle permet également l'utilisation de réflecteurs de grand diamètre.

Selon des modes de réalisation particuliers, le dispositif de connexion comporte l'une ou plusieurs des caractéristiques suivantes :

- La valeur de la dimension de ladite au moins une partie en saillie mesurée selon la direction est comprise entre 23% et 33% de la valeur de la distance entre les faces Est et Ouest mesurée selon la seconde direction.
- Une partie du au moins un radiateur principal est en saillie par rapport à la face Est et une autre partie du au moins radiateur principal est en saillie par rapport à la face Ouest.

- La au moins une partie en saillie de face interne dudit radiateur principal est revêtue par un matériau réfléchissant, préférentiellement un matériau de type réflecteur optique solaire. Avantageusement, ce revêtement est plus efficace.
- La au moins une partie en saillie de la face interne dudit radiateur principal est revêtue par de la peinture blanche. Avantageusement, ce revêtement est peu onéreux et évite les multi-réflexions spéculaires vers les antennes et les faces Est-Ouest.
- La au moins une partie en saillie de la face interne dudit radiateur principal est revêtue par de la peinture noire. Avantageusement, ce revêtement est peu onéreux Il est moins efficace qu'un revêtement en peinture blanche ou qu'un revêtement de type réflecteurs optique solaires (OSR) quand le rayonnement solaire est incident, mais cette perte d'efficacité est compensé par le fait que la face externe correspondante ne reçoit pas de rayonnement solaire.
- La dimension entre une extrémité de la face Nord et une extrémité de la face Sud diamétralement opposée est inférieure à 3,9 mètres. Avantageusement, un tel satellite peut être lancé par le lanceur Proton. Il est aussi compatible d'un plus grand nombre d'avions de transport existants.
- La structure porteuse est une structure cylindrique présentant un diamètre sensiblement égal à 1,666 mètres et dans lequel la distance entre les faces Est et Ouest mesurée selon la seconde direction est supérieure à 1,7 mètre.

Avantageusement, une structure porteuse interne de ce diamètre permet d'une part, d'augmenter la capacité d'emport de charge importante du satellite et d'autre part, d'accommoder de gros réservoirs à l'intérieur. Le diamètre de 1.666 est un diamètre d'interface standard avec les lanceurs, bien adapté aux satellites de télécommunication. Le diamètre voisin de la structure porteuse permet d'avoir un transfert des charges au lancement plus efficace. Avantageusement, comme la distance entre les faces Est et Ouest est faible, il y a suffisamment de place dans l'espace sous coiffe pour installer plusieurs antennes sur les faces Est et Ouest. Avantageusement, les chemins d'effort sur les faces Nord et Sud sont bien repris.

- Le satellite comporte au moins un réflecteur d'antenne et dans lequel ladite au moins une partie en saillie présente une entaille latérale traversée par une partie dudit au moins un réflecteur d'antenne.
- Le satellite comporte des panneaux solaires fixés à la face Nord et à la face Sud, la dimension des panneaux solaires selon la seconde direction est sensiblement égale à la dimension la face Nord et à la face Sud, selon ladite seconde direction.

L'invention sera mieux comprise à la lecture de la description qui va suivre, donnée uniquement à titre d'exemple et faite en se référant aux figures sur lesquelles :

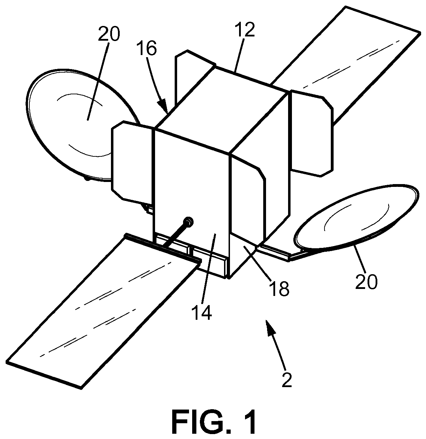

- La figure 1 est une vue schématique en perspective d'un satellite géostationnaire selon l'état de la technique ;
- La figure 2 est une vue schématique en perspective d'un satellite artificiel selon la présente invention ;
- La figure 3 est une vue schématique en coupe selon le plan de coupe III-III du satellite illustré sur la figure 2, l'espace sous coiffe étant représenté en pointillés ;
- la figure 4 est une vue schématique du satellite illustré sur les figures 2 et 3 lorsque les réflecteurs et les panneaux solaires sont déployés ; et
- La figure 5 est une vue schématique en perspective d'une variante de réalisation du satellite artificiel selon l'invention.

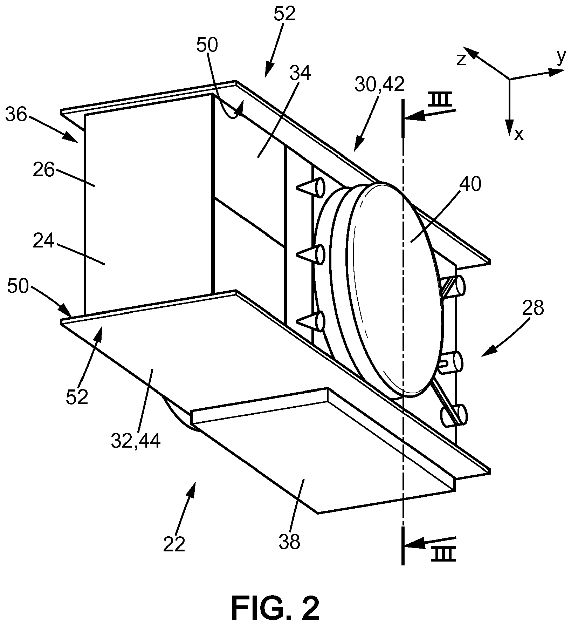

La présente invention est définie par rapport à un repère orthogonal R (x, y, z) représenté sur la figure 2. Par convention, dans la description qui va suivre, la direction z du repère R (x, y, z) est appelée « direction longitudinale» et est orientée dans la direction de lancement, la direction x de ce repère est appelée « première direction » et la direction y de ce repère est appelée « seconde direction ».

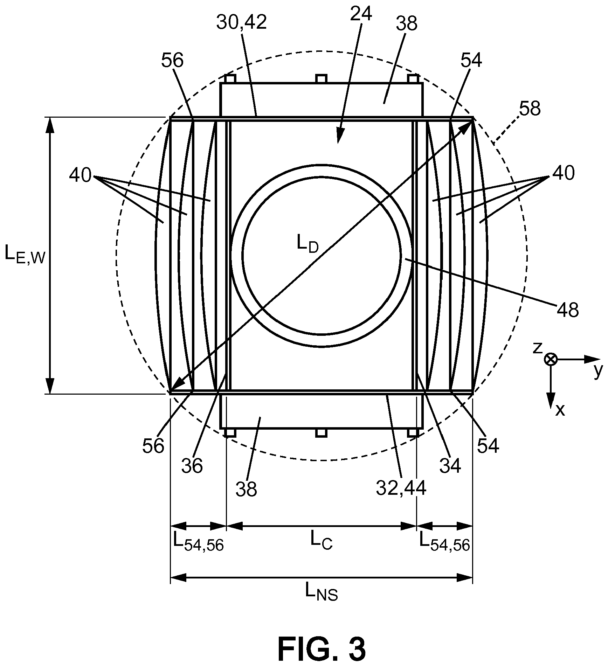

En référence aux figures 2 et 3, le satellite artificiel 22 selon l'invention comporte une face Terre 26, une face anti-Terre 28, une face Nord 30, une face Sud 32 opposée à la face Nord, une face Est 34 et une face Ouest 36 opposée à la face Est et une structure porteuse 48 portant les faces Terre 26, anti-Terre 28, Nord 30, Sud 32, Est 34, Ouest 36.

De préférence, la structure porteuse 48 est cylindrique. Préférentiellement également, la structure porteuse 48, présente un diamètre d'environ 1,666 mètre.

Les faces Terre 26, anti-Terre 28, Nord 30, Sud 32, Est 34, Ouest 36 forme une caisse parallélépipédique 24. En particulier, les faces Nord 30 et Sud 32 sont parallèles entre elles et perpendiculaires à la première direction x. De même, les faces Est 34 et Ouest 36 sont parallèles entre elles et perpendiculaires à la seconde direction y. Les faces Terre 26, anti-Terre 28, Nord 30, Sud 32, Est 34, Ouest 36 forment une caisse parallélépipédique 24. Des panneaux solaires 38 sont fixés sur les faces Nord 30 et Sud 32. Trois antennes de la charge utile de télécommunication composées de réflecteurs de 40 et de source RF 46 sont fixés sur les faces Est 34 et Ouest 36.

La face Nord 30 et la face Sud 32 portent chacune un radiateur principal 42, 44.

Les radiateurs principaux 42, 44 sont destinés à refroidir des équipements électroniques contenus dans la caisse 24. Ces équipements électroniques, non représentés sur les figures, sont reliés thermiquement aux radiateurs principaux 42, 44, par exemple, par l'intermédiaire de caloducs également non représentés. Les radiateurs principaux 42, 44 présentent chacun une face interne 50 dirigée vers et fixée à une face de la caisse, et une face externe 52 dirigée vers l'espace. La face externe 52 de ces radiateurs est recouverte d'un matériau à forte émissivité infrarouge et à faible absorptivité solaire par exemple un revêtement du type réflecteur optique solaire généralement appelé OSR de l'anglais « Optical Solar Reflector ».

Une forte émissivité est définie selon la présente invention comme une émissivité supérieure à 0.7. Une faible absorptivité solaire est définie selon la présente invention comme une absorptivité inférieure à 0.3.

Les faces Nord 30 et Sud 32 se prolongent au-delà de la face Terre 26 et au-delà de la face anti-Terre 28.

Les faces Nord 30 et Sud 32 se prolongent également au-delà de la face Est 34 et de la face Ouest 34. Comme l'ensemble des faces Nord 30 et Sud 32 portent les radiateurs principaux 42, 44, une partie 54 des radiateurs principaux est en saillie par rapport à la face Est 34 et une autre partie 56 des radiateurs principaux est en saillie par rapport à la face Ouest 36. La face interne 50 de ces parties 54, 56 de radiateur en saillie est recouverte d'un matériau à forte émissivité infra-rouge et à faible absorptivité solaire. Ainsi, non seulement la face externe 52 des radiateurs principaux mais également la face interne 50 des parties 54, 56 de radiateur en saillie, permet de dissiper de la chaleur. On peut ainsi utiliser des réflecteurs optiques solaires (OSR) qui est le revêtement le plus efficace, mais aussi le plus coûteux et qui présente l'inconvénient de causer des réflexions spéculaires parasites du soleil vers la face Est ou Ouest ou vers les antennes. Avantageusement, on utilise de la peinture blanche moins onéreuse et qui ne présente pas cet inconvénient.

Il est également avantageux d'utiliser de la peinture noire, qui a une forte émissivité infrarouge. Elle est moins efficace que la peinture blanche quand la face interne 50 est éclairée par le soleil, mais elle est moins chère, et la perte d'efficacité est compensée en partie par le fait que la face externe 52 du radiateur, qui n'est donc pas éclairée par le soleil, est plus efficace.

En recouvrant ainsi la face interne 50 des parties 54, 56 de radiateur en saillie, les inventeurs ont pu expérimenter que lorsque, la valeur de la dimension $L_{54,56}$ de chaque partie 54, 56 de radiateur en saillie est comprise entre 19% et 50% de la valeur de la distance $L_c$ entre les faces Est 34 et Ouest 36 mesurée selon la seconde direction y, la quantité de chaleur pouvant être dissipée par les radiateurs principaux est suffisante pour permettre l'installation d'un grand nombre d'équipements électroniques. Ainsi, le satellite selon la présente invention vérifie la relation suivante :

$$19\% < L_{54,56} / L_C < 50\%$$

Préférentiellement, selon la présente invention, la valeur de la dimension $L_{54,56}$ de chaque partie 54, 56 de radiateur en saillie est compris entre 19% et 33% de la valeur de la distance $L_c$ entre les faces Est 34 et Ouest 36 mesurée selon la seconde direction y.

Préférentiellement, selon la présente invention, la valeur de la dimension $L_{54,56}$ de chaque partie 54, 56 de radiateur en saillie est comprise entre 23% et 33% de la valeur de la distance $L_c$ entre les faces Est 34 et Ouest 36 mesurée selon la seconde direction y.

Comme visible sur la figure 3, selon la présente invention, les faces Nord 30 et Sud 32 présentent la même dimension $L_{NS}$ selon la seconde direction y. Les faces Est 34 et Ouest 36 présentent la même dimension $L_{EW}$ selon la première direction x.

Ainsi, avantageusement, la configuration du satellite selon la présente invention permet l'installation de réflecteurs de grand diamètre.

Selon la présente invention également, la dimension latérale $L_c$ de la caisse 24 est supérieure à 1,7 mètre. Cette dimension latérale $L_c$ est, par exemple, égale à 1,8 mètre. Cette dimension latérale $L_c$ est la distance $L_c$ entre les faces Est 34 et Ouest 36 mesurée selon la seconde direction y. Cet agencement permet aux radiateurs de se prolonger dans la direction -Z à l'extérieur de la structure porteuse 48 de sorte que les efforts au lancement sur les faces Nord et Sud soient ainsi bien repris par la structure porteuse, tout en laissant de la place pour l'accommodation d'équipement de grande taille à l'intérieur du satellite sur la face Est 34 ou Ouest 36 en vis-à-vis de la structure interne 48.

Cette configuration permet avantageusement d'installer trois réflecteurs 40 sur les faces Est 34 et Ouest 36, tout en restant dans l'espace sous coiffe 58.

Aussi, la dimension $L_D$ entre une extrémité de la face Nord 30 et une extrémité de la face Sud 32 diamétralement opposée est inférieure à 4 mètres et est de préférence inférieure à 3,9 mètres.

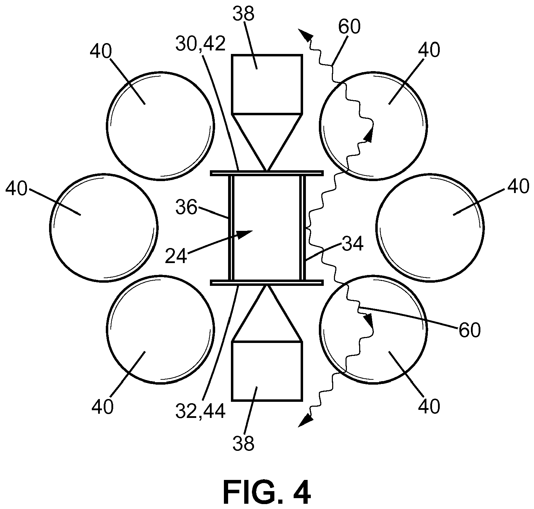

Comme la dimension $L_{54,56}$ des parties 54, 56 de radiateur en saillie n'est pas importante, l'émission et la réception de signaux 60 ne sont pas entravées par ces parties de radiateur, comme le montre la figure 4. La réduction de la surface de montage des équipements sur les faces Nord 30 et Sud 32 liée à la réduction de la distance $L_C$ entre les faces Est 34 et Ouest 36 est palliée par le montage de certains équipements électroniques à l'intérieur du satellite, par exemple sur de plateaux horizontaux porte-équipement reliés à la structure porteuse 48 centrale ou sur les faces Est 34 et Ouest 36.

Sur le mode de réalisation représenté sur la figure 3, la largeur des panneaux solaires 38 est supérieure à la dimension latérale Lc de la caisse 24. Cette dimension peut ainsi être élargie dans la limite des contraintes de la coiffe du lanceur. L'utilisation de panneaux solaires 38 larges permet de réduire le nombre de panneaux solaires sur le générateur solaire.

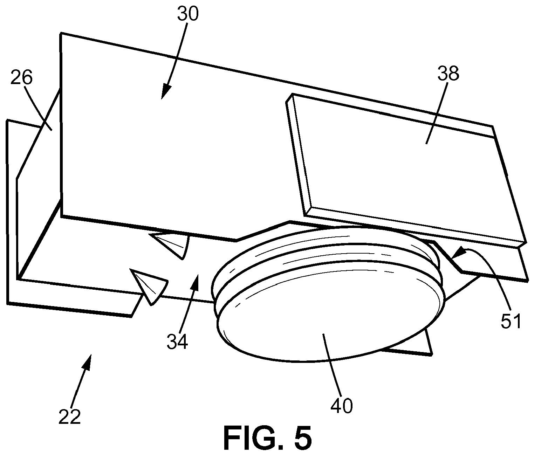

Avantageusement, selon la variante représentée sur la figure 5 les parties en saillies présente une entaille latérale 51 pour permettre l'accommodation d'un réflecteur 40 de diamètre supérieur à la distance $L_{E,W}$ entre les faces Nord 30 et Sud 32 mesurée selon la première direction x. Cette entaille latérale est réalisée par découpe d'une bande latérale du radiateur principal sur une longueur légèrement supérieure à la longueur de la partie de réflecteur qui s'étend au-delà de la face Nord ou de la face Sud. Celle entaille 51 est traversée par une partie des réflecteurs 40 d'antenne.

Dans ce cas, les panneaux solaires 38 présentent une largeur sensiblement égale à la dimension latérale Lc de la caisse 24, de façon à éviter toute interférence mécanique avec les réflecteurs 40. Dans une optique d'industrialisation de la fabrication d'un satellite, les découpes 51 sont ou non être réalisées en fonction du cahier des charges du client.

En alternative selon la présente invention, la valeur de la dimension $L_{54,56}$ de chaque partie 54, 56 de radiateur en saillie est compris entre 23% et 50 % de la valeur de la distance $L_c$ entre les faces Est 34 et Ouest 36 mesurée selon la seconde direction y.

Selon une variante non représentée, le satellite 22 ne présente qu'une seule partie de radiateur principal en saillie de manière à permettre l'accommodation d'un ou de plusieurs réflecteurs de grand diamètre sur sa face opposée. Dans ce cas, la partie de radiateur en saillie s'étend saillie par rapport à la face Est ou par rapport à la face Ouest. Selon cette variante, la plage de valeurs de la dimension $L_{54}$, ou $L_{56}$ de de ladite partie en saillie 54 ou 56 est identique aux plages de valeurs ci-dessus mentionnées pour chaque partie de radiateur en saillie dans le cas où il y a deux parties de radiateur en saillie.

En variante, l'un ou les deux radiateurs principaux sont remplacés par plusieurs radiateurs adjacents les uns aux autres. Ainsi la partie basse (vers -Z) peut être associée aux équipements de la plateforme, et la partie haute à des équipements de la charge utile.

## Revendications

1. Satellite artificiel (22) comportant une face Nord (30), une face Sud (32) opposée à la face Nord (30), une face Est (34) et une face Ouest (36) opposée à la face Est (34) ; ledit satellite (22) comprenant une direction longitudinale (z) qui s'étend dans la direction de lancement, une première direction (x) perpendiculaire à la direction longitudinale (z) et une seconde direction (y) perpendiculaire à la direction longitudinale (z) et à la première direction (x), lesdites faces Nord (30) et Sud (32) étant perpendiculaires à ladite première direction (x), lesdites faces Est (34) et Ouest (36) étant perpendiculaires à ladite seconde direction (y), la distance ($L_c$) entre les faces Est (34) et Ouest (36) mesurée selon la seconde direction (y) étant inférieure à la distance ($L_{E,W}$) entre les faces Nord (30) et Sud (32) mesurée selon la première direction (x), une face parmi la face Nord (30) et la face Sud (32), supportant au moins un radiateur principal (42, 44) ayant une face externe (52) dirigée vers l'espace et une face interne (50) opposée à la face externe (52), au moins une partie (54, 56) dudit au moins un radiateur principal (42, 44) étant en saillie par rapport à au moins une face parmi la face Est (34) et la face Ouest (36),

le satellite comportant une structure porteuse (48) portant la face Nord (30), la face Sud (32), la face Est (34) et la face Ouest (36), **caractérisé en ce que**; la face interne (50) de ladite au moins une partie en saillie (54, 56) est recouverte d'un matériau ayant une émissivité infrarouge supérieure à 0.7,

et **en ce que** la valeur de la dimension ($L_{54,56}$) de ladite au moins une partie en saillie (54, 56) mesurée selon la direction (y) est comprise entre 19% et 50% de la valeur de la distance ($L_c$) entre les faces Est (34) et Ouest (36) mesurée selon la seconde direction (y).

2. Satellite artificiel (22) selon la revendication 1, dans lequel la valeur de la dimension ($L_{54,56}$) de ladite au moins une partie en saillie (54, 56) mesurée selon la direction (y) est comprise entre 23% et 33% de la valeur de la distance ($L_c$) entre les faces Est (34) et Ouest (36) mesurée selon la seconde direction (y).

3. Satellite artificiel (22) selon la revendication 1, dans lequel une partie (54) du au moins un radiateur principal (42, 44) est en saillie par rapport à la face Est (34) et une autre partie (56) du au moins radiateur principal (42, 44) est en saillie par rapport à la face Ouest (36).

4. Satellite artificiel (22) selon l'une quelconque des revendications 1 à 3, dans lequel la face interne (50) de ladite au moins une partie en saillie du radiateur principal (42, 44) est revêtue par un matériau réfléchissant, préférentiellement un matériau de type réflecteur optique solaire.

5. Satellite artificiel (22) selon l'une quelconque des revendications 1 à 3, dans lequel la face interne (50) de ladite au moins une partie en saillie du radiateur principal (42, 44) est revêtue par de la peinture blanche.

6. Satellite artificiel (22) selon l'une quelconque des revendications 1 à 3, dans lequel la face interne (52) de ladite au moins une partie en saillie du radiateur principal (42, 44) est revêtue par de la peinture noire.

7. Satellite artificiel (22) selon l'une quelconque des revendications 1 à 6, dans lequel la dimension ($L_D$) entre une extrémité de la face Nord (30) et une extrémité de la face Sud (32) diamétralement opposée est inférieure à 3,9 mètres.

8. Satellite artificiel (22) selon l'une quelconque des revendications 1 à 7, dans lequel la structure porteuse (48) est une structure cylindrique (X) présentant un diamètre égal à 1,666 mètres et dans lequel la distance ($L_c$) entre les faces Est (34) et Ouest (36) mesurée selon la seconde direction (y) est supérieure à 1,7 mètre.

9. Satellite artificiel (22) selon l'une quelconque des revendications 1 à 8, qui comporte au moins un réflecteur (40) d'antenne et dans lequel ladite au moins une partie en saillie (54, 56) présente une entaille latérale (51) traversée par une partie dudit au moins un réflecteur (40) d'antenne.

10. Satellite artificiel (22) selon l'une quelconque des revendications 1 à 9, qui comporte des panneaux solaires (38) fixés à la face Nord (30) et à la face Sud (32), la dimension des panneaux solaires (38) selon la seconde direction (y) est sensiblement égale à la dimension la face Nord (30) et à la face Sud (32), selon ladite seconde direction (y).

## Patentansprüche

1. Künstlicher Satellit (22), umfassend eine Nordfläche (30), eine Südfläche (32) gegenüber der Nordfläche (30), eine Ostfläche (34) und eine Westfläche (36) gegenüber der Ostfläche (34); der Satellit (22) umfassend eine longitudinale Richtung (z), welche sich in der Abschussrichtung erstreckt, eine erste Richtung (x) senkrecht zu der longitudinalen Richtung (z) und eine zweite Richtung (y) senkrecht zu der longitudinalen Richtung (z) und der ersten Richtung (x), wobei die Nord- (30) und Südflächen (32) senkrecht zu der ersten Richtung (x) sind, wobei die Ost- (34) und Westflächen (36) senkrecht zu der zweiten Richtung (y) sind, der Abstand ($L_c$) zwischen den Ost- (34) und Westflächen (36) gemessen entlang der zweiten Richtung (y) kleiner ist als der Abstand ($L_{E,W}$) zwischen den Nord- (30) und Südflächen (32) gemessen entlang der ersten Richtung (x), wobei eine aus der Nordfläche (30) und der Südfläche (32) wenigstens einen Hauptradiator (42, 44) trägt, welcher eine externe Fläche (52), welche in den Raum gerichtet ist, und eine innere Fläche (50) gegenüber der externen Fläche (52) aufweist, wobei wenigstens ein Teil (54, 56) des wenigstens einen Hauptradiators (42, 44) von wenigstens einer Fläche aus der Ostfläche (34) und der Westfläche (36) vorsteht, wobei der Satellit eine Tragestruktur (48) umfasst, welche die Nordfläche (30), die Südfläche (32), die Ostfläche (34) und die Westfläche (36) trägt, **dadurch gekennzeichnet, dass** die innere Fläche (50) des wenigstens einen vorstehenden Teils (54, 56) mit einem Material bedeckt ist, welches ein Infrarot-Emissionsvermögen größer als 0,7 aufweist, und dadurch, dass der Wert der Abmessung ($L_{54, 56}$) des wenigstens einen vorstehenden Teils (54, 56), gemessen entlang der Richtung (y) zwischen 19% und 50% des Werts des Abstands ($L_c$) zwischen den Ost- (34) und Westflächen (36) beträgt, gemessen entlang der zweiten Richtung (y).

2. Künstlicher Satellit (22) nach Anspruch 1, wobei der Wert der Abmessung ($L_{54, 56}$) des wenigstens einen vorstehenden Teils (54, 56), gemessen entlang der Richtung (y) zwischen 23% und 33% des Werts des Abstands ($L_c$) zwischen den Ost- (34) und Westflächen (36) beträgt, gemessen entlang der zweiten Richtung (y).

3. Künstlicher Satellit (22) nach Anspruch 1, wobei ein Teil (54) des wenigstens einen Hauptradiators (42, 44) bezüglich der Ostfläche (34) vorsteht und ein anderer Teil (56) des wenigstens einen Hauptradiators (42, 44) bezüglich der Westfläche (36) vorsteht.

4. Künstlicher Satellit (22) nach einem der Ansprüche 1 bis 3, wobei die innere Fläche (50) des wenigstens einen vorstehenden Teils des Hauptradiators (42, 44) mit einem reflektierenden Material überzogen ist, vorzugsweise mit einem Material vom solaren optischen Reflektortyp.

5. Künstlicher Satellit (22) nach einem der Ansprüche 1 bis 3, wobei die innere Fläche (50) des wenigstens einen vorstehenden Teils des Hauptradiators (42, 44) mit weißer Farbe überzogen ist.

6. Künstlicher Satellit (22) nach einem der Ansprüche 1 bis 3, wobei die innere Fläche (52) des wenigstens einen vorstehenden Teils des Hauptradiators (42, 44) mit schwarzer Farbe überzogen ist.

7. Künstlicher Satellit (22) nach einem der Ansprüche 1 bis 6, wobei die Abmessung ($L_D$) zwischen einem Ende der Nordfläche (30) und einem Ende der Südfläche (32) diametral gegenüber kleiner ist als 3,9 Meter.

8. Künstlicher Satellit (22) nach einem der Ansprüche 1 bis 7, wobei die Tragestruktur (48) eine zylindrische Struktur (X) ist, welche einen Durchmesser gleich 1,666 Meter aufweist, und wobei der Abstand ($L_c$) zwischen den Ost- (34) und Westflächen (36), gemessen entlang der zweiten Richtung (y), größer als 1,7 Meter ist.

9. Künstlicher Satellit (22) nach einem der Ansprüche 1 bis 8, umfassend wenigstens einen Antennenreflektor (40), und wobei der wenigstens eine vorstehende Teil (54, 56) eine laterale Einkerbung (51) aufweist, welche von einem Teil des wenigstens einen Antennenreflektors (40) durchlaufen wird.

10. Künstlicher Satellit (22) nach einem der Ansprüche 1 bis 9, umfassend Solarpaneele (38), welche an der Nordfläche (30) und an der Südfläche (32) befestigt sind, wobei die Abmessung der Solarpaneele (38) entlang der zweiten Richtung (y) im Wesentlichen gleich der Abmessung der Nordfläche (30) und der Südfläche (32) entlang der zweiten Richtung (y) ist.

**Claims**

1. Artificial satellite (22) comprising a North face (30), a South face (32) opposite the North face (30), an East face (34) and a West face (36) opposite the East face (34); said satellite (22) comprising a longitudinal direction (z) which extends in the launch direction, a first direction (x) perpendicular to the longitudinal direction (z) and a second direction (y) perpendicular to the longitudinal direction (z) and the first direction (x), said North (30) and South (32) faces being perpendicular to said first direction (x), said East (34) and West (36) faces being perpendicular to said second direction (y), the distance ($L_C$) between the East (34) and West (36) faces measured along the second direction (y) being less than the distance ($L_{E,W}$) between the North (30) and South (32) faces measured along the first direction (x), one face from the North face (30) and the South face (32), supporting at least one main radiator (42, 44) that has an outer face (52) turned towards space and an inner face (50) opposite the outer face (52), at least one part of said at least one main radiator (42, 44) protruding in relation to the at least one face from the East face (34) and the West face, (36) the satellite comprising a bearing structure (48) carrying the North face (30), the South face (32), the East face (34) and the West face (36), **characterized in that** the inner face (50) of said at least one protruding part (54, 56) being covered with a material having an infrared emissivity higher than 0.7, and **in that** the value of the dimension ($L_{54,56}$) of said at least one protruding part (54, 56) measured along the direction (y) is between 19% and 50% of the value of the distance ($L_C$) between the East (34) and West (36) faces measured along the second direction (y).

2. Artificial satellite (22) according to claim 1, wherein the value of the dimension ($L_{54,56}$) of said at least one protruding part (54, 56) measured along the direction (y) is between 23% and 33% of the value of the distance ($L_C$) between the East (34) and West (36) faces measured along the second direction (y).

3. Artificial satellite (22) according to claim 1, wherein a part (54) of the at least one main radiator (42, 44) protrudes in relation to the East face (34) and another part (56) of the at least one main radiator (42, 44) protrudes in relation to the West face (36).

4. Artificial satellite (22) according to any one of the claims 1 to 3, wherein the inner face (50) of said main radiator (42, 44) is coated with a reflective material, preferably an optical solar reflector type material.

5. Artificial satellite (22) according to any one of the claims 1 to 3, wherein the inner face (50) of said at least protruding part of the main radiator (42, 44) is coated with white paint.

6. Artificial satellite (22) according to any one of the claims 1 to 3, wherein the inner face (52) of said at least protruding part of the main radiator (42, 44) is coated with black paint.

7. Artificial satellite (22) according to any one of the claims 1 to 6, wherein the dimension ($L_D$) between an end of the North face (30) and an end of the South face (32) diametrically opposite is less than 3.9 meters.

8. Artificial satellite (22) according to any one of the claims 1 to 7, wherein the bearing structure (48) is a cylindrical structure (X) that has a diameter substantially equal to 1.666 meters and wherein the distance ($L_C$) between the East (34) and West (36) faces measured along the second direction (y) is more than 1.7 meters.

9. Artificial satellite (22) according to any one of the claims 1 to 8, which comprises at least one antenna reflector (40) and wherein said at least protruding part (54, 56) has a lateral notch (51) crossed by a part of said at least one antenna reflector (40).

10. Artificial satellite (22) according to any one of the claims 1 to 9, which comprises solar panels (38) attached to the North face (30) and to the South face (32), the dimension of the solar panels (38) along the second direction (y) is substantially equal to the dimension of the North face (30) and to the dimension of the South face (32), along said second direction (y).

FIG. 1

FIG. 2

FIG. 3

FIG. 4

FIG. 5

**EP 3 259 188 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5833175 A
- US 6478258 B
- US 20140299714 A